# EUROPÄISCHE PATENTSCHRIFT

(11) **EP 1 171 738 B1**
(45) Veröffentlichungstag und Bekanntmachung des Hinweises auf die Patenterteilung: **25.08.2010**
(21) Anmeldenummer: 00988673.0
(22) Anmeldetag: 30.11.2000
(51) Int. Cl.: F21V 8/00

(54) **BELEUCHTUNGSANORDNUNG**
LIGHTING DEVICE
DISPOSITIF D'ECLAIRAGE

(30) Priorität: 30.11.1999 DE 19957611
(43) Veröffentlichungstag der Anmeldung: 16.01.2002
(73) Patentinhaber: OSRAM Opto Semiconductors GmbH, 93055 Regensburg (DE)
(72) Erfinder: BACHL, Bernhard, 93055 Regensburg (DE); WANNINGER, Mario, 93092 Barbing (DE)
(74) Vertreter: Epping - Hermann - Fischer
(86) Internationale Anmeldenummer: PCT/DE2000/004270
(87) Internationale Veröffentlichungsnummer: WO 2001/040707

(56) Entgegenhaltungen:
- EP-A- 0 879 991
- EP-A- 1 039 216
- DE-A- 19 715 053
- DE-U- 9 101 437
- JP-A- 10 188 641
- US-A- 3 262 224

## Beschreibung

Die Erfindung betrifft eine Beleuchtungsanordnung mit einem Lichtleiter, einer Lichtquelle, die emittiertes Licht in den Lichtleiter einkoppelt, und mit einer Halterung für den Lichtleiter.

Derartige Anordnungen, bei denen als Lichtquelle oft eine Leuchtdiode oder eine Laserdiode eingesetzt wird, finden Anwendungen in der Allgemeinbeleuchtung oder als Hintergrundbeleuchtung für Flüssigkeitskristall-Anzeigen (LCD). Der Lichtleiter übernimmt dabei die Funktion der Lichtführung des von der Lichtquelle emittierten Lichts, das am Ende des Lichtleiters oder an einem dafür vorgesehenen Fenster aus dem Lichtleiter ausgekoppelt wird. Die Oberfläche des Lichtleiters ist dazu im Fensterbereich strukturiert, z.B. durch Noppen, Rillen oder durch sonstiges Aufrauhen, um den Lichtaustritt zu homogenisieren. Die Lichtleiter bestehen aus transparenten Materialien, beispielsweise Epoxidharz oder Polymethylmetacrylat (PMMA). Bei der Führung des Lichts und seiner notwendigen Umlenkung im Lichtleiter darf einerseits möglichst wenig Licht verlorengehen, und andererseits müssen eine kostengünstige Herstellung sowie eine praktische und einfache Montage möglich sein.

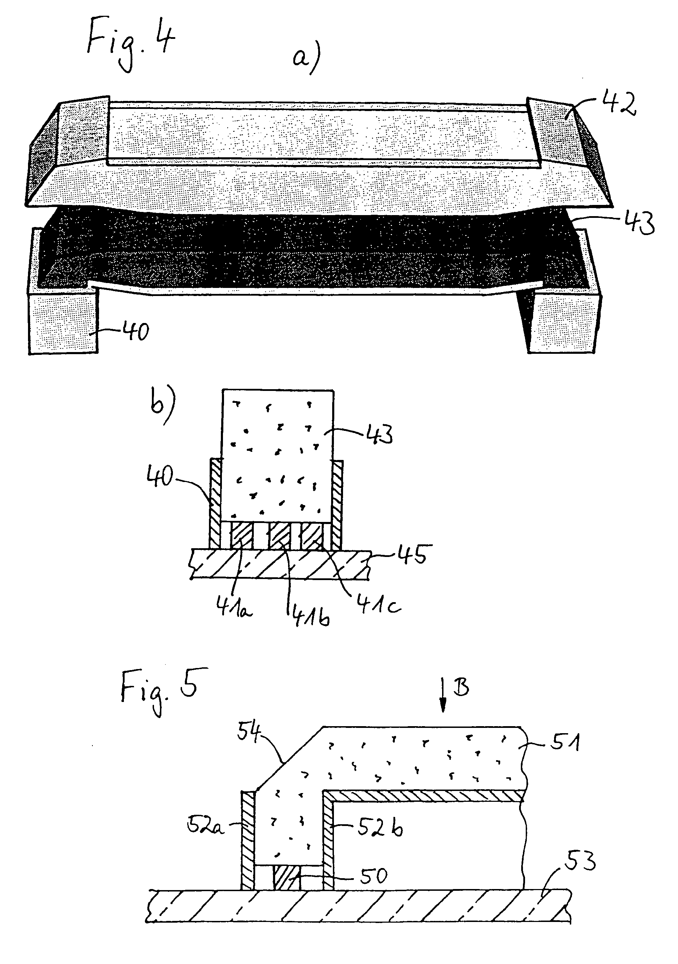

Bei der in Figur 5 gezeigten Beleuchtungseinrichtung koppelt eine Leuchtdiode 50 ihr Licht in einen Lichtleiter 51 ein, der in eine Halterung 52a, 52b eingesteckt ist. Die Halterung 52 und die Leuchtdiode 50 sind auf einer Platine mit einer gedruckten Schaltung (PCB) 53 montiert. Die Umlenkung des von der Leuchtdiode 50 ausgesandten Lichts erfolgt an einer Schräge 54 des Lichtleiters durch Totalreflektion. Aus produktionstechnischen Gründen, insbesondere zugunsten einer der leichten Montierbarkeit, ist die Schräge 54 nicht mit einem reflektierenden Material abgedeckt. Bei der Umlenkung des Lichts an der um vorzugsweise 45° abgewinkelten Schräge 54 tritt notwendigerweise Licht aus dem Lichtleiter aus, das für den vorgesehenen Anwendungszweck verlorengeht, da es nicht weiter im Lichtleiter geführt wird. Auf der anderen Seite dienen die Halterungen 52a, 52b gleichzeitig als Reflektoren, die verhindern, daß auf diesen Seiten Licht aus dem Lichtleiter 51 austritt. Bei einer Betrachtung der Oberfläche des Lichtleiters aus der Richtung B, beispielsweise bei Ausführung des Lichtleiters als LCD-Hintergrundbeleuchtung, erscheinen durch die.Lichtumlenkung an der Grenzfläche 54 und die Direktstrahlung der Lichtquelle einige Bereiche an der Lichtleiteroberfläche heller als andere (Hot spots). Hot spots sind helle Flächenbereiche, die in Lichtaustrittsfenster erscheinen und durch die Oberflächengestaltung des Lichtleiters im Lichtaustrittsfenster nicht korrigiert werden können. Eine Herstellung eines speziellen Reflektors für die Schrägfläche 54 in Form eines Spritzgußteils erscheint andererseits großserienmäßig zu aufwendig, da insgesamt zu teuer.

In der Druckschrift US 3,262,224 und der nachveröffentlichten Druckschrift EP 1 039 216 werden zusammengesetzte Beleuchtungseinrichtungen mit Lichtleitern beschrieben.

Der Erfindung liegt die Aufgabe zugrunde, eine Beleuchtungsanordnung der eingangs genannten Art und ein Verfahren zu ihrer Herstellung anzugeben, die in kostengünstiger Weise eine Verbesserung ermöglicht.

Diese Aufgabe löst die Erfindung mit den Merkmalen der Patentansprüche 1 und 14. Ausgestaltungen der Erfindung sind in Unteransprüchen gekennzeichnet.

Die Erfindung wird nachfolgend anhand von Ausführungsbeispielen beschrieben, die in den Figuren der Zeichnung dargestellt sind. Es zeigen:
Figur 1, einen schematischen Querschnitt durch eine erfindungsgemäße Beleuchtungsanordnung,
Figuren 2a und 2b, Seitenansichten einer Halterung für den Lichtleiter,
Figur 3, einen schematischen Querschnitt einer weiteren, nicht zur Erfindung gehörigen Ausführungsform,
Figuren 4a und 4b, eine weitere teilweise perspektivisch dargestellte Ausführungsform der Erfindung, und
Figur 5, eine schematische Querschnittsdarstellung bisher benutzter Beleuchtungsanordnungen.

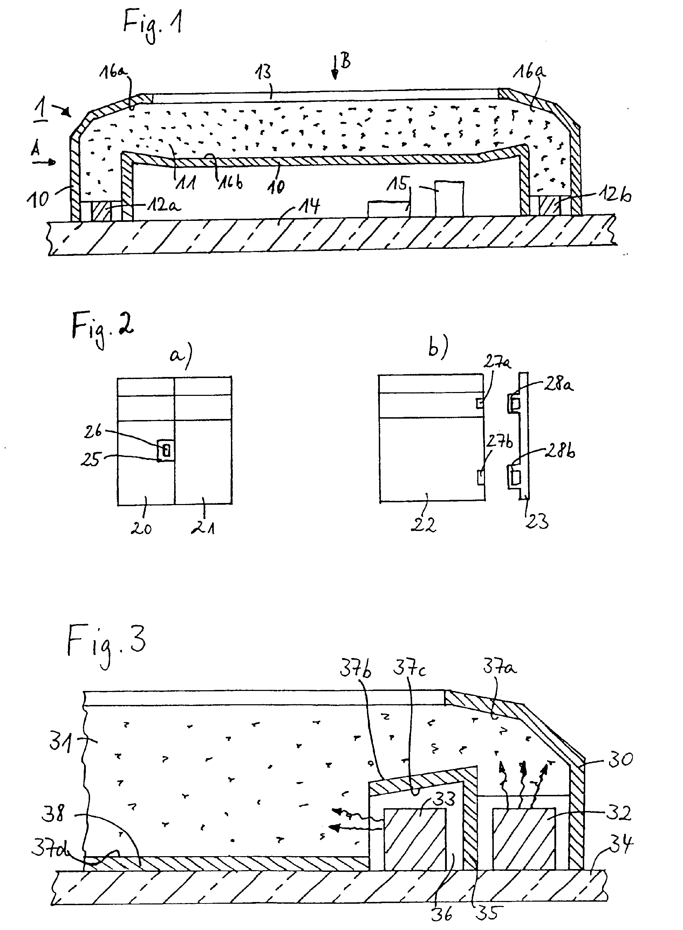

Figur 1 zeigt eine Beleuchtungsanordnung 1 in einer Querschnittsdarstellung. Die Anordnung umfaßt eine Halterung 10 für einen Lichtleiter 11, in den eine oder mehrere Lichtquellen 12a, 12b Licht einspeisen. Die Lichtquellen 12 sind bevorzugt lichtemittierende Dioden (LED) oder Laserdioden, jedoch sind auch andere Lichtquellen wie Glühlampen möglich.

Die Lichtquelle 12 und die Halterung 10 sind auf einer Platine 14 mit einer bedruckten Schaltung montiert. Die Halterung 10 umgibt den Lichtleiter 11 in den Bereichen, in denen das Licht umgelenkt und geführt werden muß, schalenförmig. Um dabei den Lichtleiter in die Schale einzubringen und montieren zu können, ist die Halterung 10 aus mehreren Teilschalen gebildet. Im Beispiel der Figur 1 enthält die Halterung 10 auf ihrer Oberseite ein Fenster 13, durch das ein Beobachter B den Lichtleiter betrachten oder das Licht ausgekoppelt werden kann. Das Fenster 13 in der Halterung 10 ist so ausgestaltet, daß die Beleuchtungsanordnung als Element einer Hintergrundbeleuchtung für Flüssigkristall-Azeigen dienen kann.

Gemäß Figur 1 hat die Halterung 10 für den Lichtleiter 11 gleichzeitig die Hauptfunktion eines Reflektors mit den Reflektorflächen 16a, 16b, mit dessen Hilfe die Lichtstrahlen umgelenkt werden können, ohne daß größere Lichtverluste entstehen. Der Umlenkwinkel ist an sich bliebig, hier jedoch 90°. Je nach technischen Erfordernissen und Vorgaben wird der Lichtleiter 11 mit der Halterung 10 so konstruiert, daß die optischen Verluste und bzw. oder die hot spots minimal werden. Die Formgebung der Halterung 10 erfolgt im Umlenkbereich des Lichts und im Fensterbereich 10, daß Licht diffus durch das Fenster 13 austreten kann. Die obere Reflektorfläche 16a kann mehrfach abgewinkelt oder gerundet sein. Die untere Reflektorfläche 16b ist bezüglich des Lichtleiters konvex geformt bzw. aufgeweitet, damit Licht nicht an einer Stelle konzentriert austreten kann. Sowohl der Lichtleiter 11 als auch die Halterung 10 können als Spritzgußteile hergestellt werden. Als Lichtleiter dient transparentes Material, z.B. PMMA. Die Halterung 10 ist typischerweise lichtundurchlässig und an ihren Innenflächen reflektierend, um das an den Umlenkstellen des Lichtleiters austretende Licht in den Lichtleiter zurückzuwerfen.

Gemäß der Erfindung ist die Halterung 10 schalenförmig ausgebildet und enthält zumindest zwei Teilschalen. Figur 2a zeigt eine Seitenansicht der Anordnung gemäß Figur 1 aus Blickrichtung A. Gemäß Figur 2a enthält die Halterung für den Lichtleiter zwei Teilschalen 20 und 21, die weitgehend symmetrisch zur Mittellinie ausgebildet sind. In Lichtausbreitungsrichtung hat der Lichtleiter einen weitgehend rechteckigen Querschnitt. Bei der Montage wird der Lichtleiter zunächst in eine der beiden Teilschalen 20 oder 21 seitlich eingeführt und danach mit der anderen Halbschale 21 bzw. 20 an den noch nicht geschützten Bereichen umschlossen.

Die Verbindung der beiden Halbschalen 20 und 21 erfolgt durch eine Schnappeinrichtung 25, 26. Dabei wird eine an der Halbschale 21 befestigte Lasche 25 mit einer Öffnung über eine an der anderen Halbschale 20 befestigten Noppe 26 geschoben. Die Verbindung der beiden Halbschalen kann jedoch auch in jeder anderen Form erfolgen, die sicherstellt, daß die beiden Halbschalen den Lichtleiter umschließen. Neben einer löslichen Verbindung wie mit den Schnappern 25, 26 kommen auch feste Verbindungen, beispielsweise durch Kleben in Frage. Um zu verhindern, daß an der Stoßkante der beiden Halbschalen 20 und 21 eventuell durch Materialtoleranzen oder durch ein Alterungsverhalten entstehende Spalte zur Auskopplung von Licht führen, ist es möglich, die beiden Teilschalen 20 und 21 an ihrer Stoßkante zu falzen, sodaß die Teilschalen am Falz überlappen und optisch undurchlässig werden.

Figur 2b zeigt eine andere Anordnung für die beiden Teilschalen. Dabei wird der Lichtleiter zunächst von seitwärts in eine Teilschale 22 eingeführt, die den Lichtleiter soweit umschließt, daß nur noch ein Deckel 23 seitlich aufgesetzt werden muß, um den Lichtleiter im Lichtleitungsbereich zu umschließen. In diesem Ausführungsbeispiel erfolgt die Verbindung zwischen den Teilschalen 22 und 23 durch eine Mehrzahl von Schnappeinrichtungen 27, 28. Auf der Teilschale 22 sind vorspringende Noppen angeordnet, in die die Öffnungen der Laschen 28 einrasten können. Der Vorteil dieser Anordnung ist die Lösbarkeit der Halterungsanordnung. Selbstverständlich können auch bei einer Ausführungsform der Figur 2a die Teilschalen 22 und 23 mit einem Falz versehen sein, sodaß an der Stoßfläche kein Licht austreten kann.

In der Anordnung gemäß Figur 1 ist es möglich, Licht von nur einer Lichtquelle 12 einzuspeisen. Bevorzugt jedoch werden mehrere Lichtquellen 12a, 12b vorgesehen, die, wie in Figur 1, Licht von beiden Seiten in den Lichtleiter einspeisen. Darüber hinaus können senkrecht zur Zeichenebene weitere Lichtquellen angeordnet sein. Dadurch wird es möglich, am Fenster 13 eine hohe Lichtintensität zu beobachten.

Mit der Anordnung gemäß Figur 1 ist es möglich, das auszukoppelnde Licht bzw. das Beobachtungsfenster 13 entfernt von der Lichtquelle 12 anzuordnen. Die Herstellung des Lichtleiters 11 bzw. der Schalenhalterung 10 kann durch die Herstellung als Spritzgußteile außerordentlich günstig erfolgen, wobei gleichzeitig die Lichtführung durch die Form der Lichtleiterkanäle und der als Reflektoren ausgebildeten Schalenhalterung so optimal erfolgen, daß ein Maximum an Licht für die Beleuchtungszwecke ausgenutzt werden kann. Durch den Aufbau in Form einer Brücke lassen sich äußerst platzsparende Anordnungen herstellen, weil unterhalb der Halterung 10 in dem freien Raum zur Platine 14 hin weitere Bauelemente 15 auf der Platine angeordnet werden können.

Figur 3 zeigt einen Teilquerschnitt einer weiteren, nicht zur Erfindung gehörigen Beleuchtungseinrichtung. Diese sieht eine schalenförmige Halterung 30 für den Lichtleiter 31 vor, die in diesem Fall mit ihrer Seite 38 flächig auf die Platine 34 montiert sind. Im Unterschied zur Figur 1 enthält die Anordnung nicht nur eine nach oben abstrahlende LED 32 sondern eine von dieser durch eine Trennwand 35 abgeteilte Kammer 36, in der eine seitwärts über die Kanten abstrahlende LED oder Laserdiode 33 angeordnet ist. Bei dieser Konstruktion ist eine Brückenanordnung wie in Figur 1 dargestellt nicht vorgesehen. Der Vorteil der Anordnung gemäß

Figur 3 besteht darin, daß die in den Lichtleiter eingekoppelte Lichtleistung erheblich höher sein kann als bei der Anordnung in Figur 1. Auch hier dienen die Innenflächen 37 der Halterung 30 als Reflektoren.

Die Figuren 4a und b zeigen in teilweise perspektivischer Darstellung ein weiteres Ausführungsbeispiel der Erfindung, bei der die Teilschalen der Halterung nicht vertikal getrennt sind, wie in Figur 2 dargestellt, sondern horizontal. In dieser Ausführungsform wird der Lichtleiter 43 von oben in die untere Teilschale 40 eingesteckt und anschließend mit der oberen Teilschale 42 abgedeckt. Die untere Teilschale ist auf das PCB 45 montiert. Die obere Teilschale kann wie anhand der

Figur 2 beschrieben mit der unteren Teilschale verbunden werden. Im Ausführungsbeispiel sind auf jeder Platinenseite des Lichtleiters 3 LEDs 41a bis 41c vorgesehen, es können jedoch auch mehr oder weniger Einzellichtquellen sein.

Weiterhin ist eine Vielzahl von Möglichkeiten zur Herstellung von Lichtleitern und zugehörigen Teilschalen möglich, die eine nahezu beliebige Variation für das Einkoppeln und Auskoppeln von Licht ermöglichen. Dies liegt daran, daß die Lichtleiter bis auf die Einkoppel- bzw. Auskoppelbereiche weitgehend vollständig von der strahlenförmigen Halterung abgedeckt sind, wobei die inneren Oberflächen der Halterung als Reflektorflächen dienen.

## Patentansprüche

1. Beleuchtungsanordnung mit einem Lichtleiter (11; 31; 43), einer Lichtquelle (12; 32, 33; 41), die emittiertes Licht in den Lichtleiter einkoppelt, und mit einer Halterung (10; 20, 21; 22, 23; 30, 35, 38; 40, 42), die schalenförmig aus mehreren miteinander verbundenen Teilschalen gebildet ist, welche den Lichtleiter zumindest in Bereichen, in denen das Licht umgelenkt werden soll, umschließen, wobei der Lichtleiter und die Halterung in Form einer Brücke aufgebaut sind und wobei die Innenwände der Teilschalen als Reflektoren (16) mit einer oberen Reflektorfläche (16a) und einer unteren Reflektorfläche (16b) ausgebildet sind und die untere Reflektorfläche (16b) bezüglich des Lichtleiters (11; 43) konvex geformt ist.

2. Beleuchtungsansordnung nach Anspruch 1,
**dadurch gekennzeichnet, daß** die wenigstens eine Teilschale eine Lichtaustrittsöffnung (13) hat.

3. Beleuchtungsanordnung nach einem vorhergehenden Ansprüche, **dadurch gekennzeichnet, daß** die Halterung für den Lichthalter aus zwei Teilschalen (20, 21; 22, 23; 40, 42) aufgebaut ist.

4. Beleuchtungsanordnung nach einem der vorhergehenden Ansprüche,
**dadurch gekennzeichnet, daß** die Teilschalen eine vertikale oder horizontale Stoßkante enthalten und/oder einen überlappenden Falz.

5. Beleuchtungsanordnung nach einem der vorhergehenden Ansprüche,
**dadurch gekennzeichnet, daß**
die Teilschalen (20, 21) etwa mittig zum Lichtleiter aneinanderstoßen und im wesentlichen symmetrisch aufgebaut sind.

6. Beleuchtungsanordnung nach einem der Patentansprüche 1 bis 4,
**dadurch gekennzeichnet, daß** die Teilschalen (22, 23) ein Teil (22) enthalten, das den Lichtleiter im wesentlichen an drei Seiten aufnimmt und mit einer Seitenwand (22) abschließbar ist.

7. Beleuchtungsanordnung nach einem der Ansprüche 1 bis 4, **dadurch gekennzeichnet, daß** die Teilschalen (40, 42) ein Fußteil (40) und einen Deckel (42) enthalten.

8. Beleuchtungsanordnung nach einem der vorhergehenden Ansprüche,
**dadurch gekennzeichnet, daß** der Lichtleiter und die Teilschalen der Halterung als Formteile ausgebildet und aufeinander derart abgestimmt sind, daß die Lichtleitungsverluste und/oder helle Flächenbereiche (hot spots) minimal sind.

9. Beleuchtungsanordnung nach einem der vorhergehenden Ansprüche,
**dadurch gekennzeichnet, daß** die Teilschalen durch lösbare Elemente (25, 26; 27,28) miteinander verbindbar sind.

10. Beleuchtungsanordnung nach einem der vorhergehenden Ansprüche,
**dadurch gekennzeichnet, daß** die Lichtquelle eine lichtemittierende Diode (LED) oder ein Laserdiode ist, über der die Halterung für den Lichtleiter angeordnet ist und die das emittierte Licht unmittelbar in den Lichtleiter einkoppelt.

11. Beleuchtungsanordnung nach einem der vorhergehenden Ansprüche,
**dadurch gekennzeichnet, daß** mehrere Lichtquellen (41a, 41b, 41c; 12a, 12b) vorgesehen sind.

12. Beleuchtungsanordnung nach einem der vorhergehenden Ansprüche,
**dadurch gekennzeichnet, daß** die Halterung (30, 35, 38) derart aufgebaut ist, daß sie eine vertikal (12; 32; 42) und/oder horizontal (33) emittierende Lichtquelle aufnehmen kann.

13. Verfahren zur Herstellung einer Beleuchtungsanordnung nach Patentanspruch 1
**dadurch gekennzeichnet, daß** ein Lichtleiter (11; 31; 43) zunächst in eine Teilschale (20; 22; 40) eingesetzt und dann mit einer weiteren Teilschale (21; 23; 42) abgedeckt wird.

14. Verfahren nach Anspruch 13,
**dadurch gekennzeichnet, daß** der Lichtleiter und die Teilschalen als Spritzteile hergestellt werden.

15. Verfahren nach einem der Ansprüche 13 oder 14, **dadurch gekennzeichnet, daß** die Halterung mit dem eingesetzten Lichtleiter mit einer Platine (14; 34; 45) so verbunden werden, daß diese oberhalb einer Lichtquelle angeordnet sind, welche über Leitungen auf der Platine elektrisch versorgt wird.

16. Verfahren nach Anspruch 13 oder 14,
**dadurch gekennzeichnet, daß** zunächst ein Unterteil (40) der Halterung für den Lichtleiter mit einer Platine (45) oberhalb einer Lichtquelle (42) verbunden wird, daß danach der Lichtleiter (43) in das Unterteil (40) eingeführt wird, und daß anschließend auf das Unterteil und den Lichtleiter ein Deckel (40) aufgesetzt und mit dem Unterteil (40) verbunden wird.

## Claims

1. A lighting arrangement having a optical waveguide (11; 31; 43), a light source (12; 32, 33; 41) which couples emitted light into the optical waveguide, and having a mounting element (10; 20, 21; 22, 23; 30, 35, 38; 40, 42) formed as a shell from a plurality of partial shells connected to each other and enclosing the optical waveguide at least in regions in which the light is to be deflected, wherein the optical waveguide and the mounting element are constructed in the form of a bridge, and wherein the inner walls of the partial shells are designed as reflectors (16) having an upper reflector surface (16a) and a lower reflector surface (16b), and the lower reflector surface (16b) is convex in form relative to the optical waveguide (11; 43).

2. The lighting arrangement according to claim 1, **characterized in that**
the at least one partial shell has a light outlet opening (13).

3. The lighting arrangement according to any one of the preceding claims,
**characterized in that**
the mounting element for the light mount is constructed of two partial shells (20, 21; 22, 23; 40, 42).

4. The lighting arrangement according to any one of the preceding claims,
**characterized in that**
the partial shells comprise a vertical or horizontal abutting edge and/or an overlapping fold.

5. The lighting arrangement according to any one of the preceding claims,
**characterized in that**
the partial shells (20, 21) abut one another approximately at the center of the optical waveguide and are constructed essentially symmetrically.

6. The lighting arrangement according to any one of the claims 1 through 4,
**characterized in that** the partial shells (22, 23) comprise a part (22) receiving the optical waveguide essentially on three sides and that can be closed off by a side wall (22).

7. The lighting arrangement according to any one of the claims 1 through 4,
**characterized in that**
the partial shells (40, 42) comprise a base part (40) and a cover (42).

8. The lighting arrangement according to any one of the preceding claims,
**characterized in that** the optical waveguide and the partial shells of the mounting element are formed as molded parts and are adapted to each other such that the light guiding losses and/or bright surface areas (hot spots) are minimal.

9. The lighting arrangement according to any one of the preceding claims,
**characterized in that** the partial shells can be connected to each other by removable elements (25, 26; 27, 28).

10. The lighting arrangement according to any one of the preceding claims,
**characterized in that** the light source is a light-emitting diode (LED) or a laser diode, above which the mounting element for the optical waveguide is disposed, and which couples the emitted light directly into the optical waveguide.

11. The lighting arrangement according to any one of the preceding claims,
**characterized in that**
a plurality of light sources (41a, 41b, 41c; 12a, 12b) are provided.

12. The lighting arrangement according to any one of the preceding claims,
**characterized in that** the mounting element (30, 35, 38) is constructed such that it can receive a vertically (12; 32; 42) and/or horizontally (33) emitting light source.

13. A method for producing a lighting arrangement according to claim 1,
**characterized in that** a optical waveguide (11; 31; 43) is first placed in one partial shell (20; 22; 40) and then covered by a further partial shell (21; 23; 42).

14. The method according to claim 13,
**characterized in that** the optical waveguide and the partial shells are produced as injection moulded parts.

15. The method according to any one of the claims 13 or 14, **characterized in that**
the mounting element having the inserted optical waveguide is connected to a circuit board (14; 34; 45) so that the circuit board is disposed above a light source which is electrically supplied via lines on the circuit board.

16. The method according to claim 13 or 14, **characterized in that**
a lower part (40) of the mounting element for the optical waveguide is first connected to a circuit board (45) above a light source (42), such that the optical waveguide (43) is subsequently introduced into the lower part (40), and that a cover (40) is subsequently placed on the base and the optical waveguide, and is connected to the lower part (40).

## Revendications

1. Système d'éclairage avec un conduit de lumière (11; 31; 43), une source lumineuse (12; 32, 33; 41), qui couple la lumière émise dans le conduit de lumière, et une attache (10; 20, 21; 22, 23; 30, 35, 38; 40, 42), qui se présente sous forme de coque et se compose de plusieurs coques partielles jointes les unes aux autres, lesquelles enveloppent le conduit de lumière au moins dans des zones où doit être déviée la lumière, sachant que le conduit de lumière et l'attache présentent une configuration en pont, et sachant que les parois intérieures des coques partielles se présentent sous forme de réflecteurs (16) avec une surface de réflecteur supérieure (16a) et une surface de réflecteur inférieure (16b) et que la surface de réflecteur inférieure (16b) se présente sous une forme convexe par rapport au conduit de lumière (11 ; 43).

2. Système d'éclairage selon la revendication 1, **caractérisé en ce que** l'au moins une coque partielle comporte un orifice de sortie de lumière (13).

3. Système d'éclairage selon l'une quelconque des revendications précédentes, **caractérisé en ce que** l'attache pour le porte-lumière se compose de deux coques partielles (20, 21 ; 22, 23 ; 40, 42).

4. Système d'éclairage selon l'une quelconque des revendications précédentes, **caractérisé en ce que** les coques partielles comportent un rebord vertical ou horizontal et/ou une rainure imbriquée.

5. Système d'éclairage selon l'une quelconque des revendications précédentes, **caractérisé en ce que** les coques partielles (20, 21) s'aboutent approximativement au centre du conduit de lumière et présentent une configuration essentiellement symétrique.

6. Système d'éclairage selon l'une quelconque des revendications 1 à 4, **caractérisé en ce que** les coques partielles (22, 23) comportent une partie (22) qui accueille le conduit de lumière essentiellement sur trois côtés et peut être fermée à l'aide d'une paroi latérale (22).

7. Système d'éclairage selon l'une quelconque des revendications 1 à 4, **caractérisé en ce que** les coques partielles (40, 42) comportent une partie de pied (40) et un couvercle (42).

8. Système d'éclairage selon l'une quelconque des revendications précédentes, **caractérisé en ce que** le conduit de lumière et les coques partielles de l'attache se présentent sous la forme de pièces moulées et sont adaptées les unes aux autres de telle manière que soient minimales les pertes de conduction de lumière et/ou les zones de surface claires (hot spots).

9. Système d'éclairage selon l'une quelconque des revendications précédentes, **caractérisé en ce que** les coques partielles sont joignables par des éléments détachables (25, 26 ; 27,28).

10. Système d'éclairage selon l'une quelconque des revendications précédentes, **caractérisé en ce que** la source lumineuse est une diode électroluminescente (DEL) ou une diode laser, au-dessus de laquelle est disposée l'attache pour le conduit de lumière et qui couple la lumière émise directement dans le conduit de lumière.

11. Système d'éclairage selon l'une quelconque des revendications précédentes, **caractérisé en ce que** plusieurs sources lumineuses (41a, 41b, 41c ; 12a, 12b) sont prévues.

12. Système d'éclairage selon l'une quelconque des revendications précédentes, **caractérisé en ce que** l'attache (30, 35, 38) se présente sous une forme lui permettant d'accueillir une source lumineuse émettant verticalement (12 ; 32 ; 42) et/ou horizontalement (33).

13. Procédé pour fabriquer un système d'éclairage selon la revendication de brevet 1, **caractérisé en ce qu'**un conduit de lumière (11 ; 31 ; 43) est d'abord mis en place dans une coque partielle (20 ; 22 ; 40), puis recouvert par une seconde coque partielle (21 ; 23 ; 42).

14. Procédé selon la revendication 13, **caractérisé en ce que** le conduit de lumière et les coques partielles sont fabriquées sous forme de pièces moulées par injection.

15. Procédé selon l'une des revendications 13 ou 14, **caractérisé en ce que** l'attache avec le conduit de lumière mis en place sont joints à une platine (14 ; 34 ; 45) de manière à être disposés au-dessus d'une source lumineuse alimentée en énergie électrique via des conduits sur la platine.

16. Procédé selon l'une des revendications 13 ou 14, **caractérisé en ce qu'**une partie inférieure (40) de l'attache pour le conduit de lumière est d'abord jointe à une platine (45) au-dessus d'une source lumineuse (42), que le conduit de lumière (43) est ensuite introduit dans la partie inférieure (40) et qu'un couvercle (40) est ensuite posé sur la partie inférieure et le de lumière, puis relié à la partie inférieure (40).
